# EUROPEAN PATENT APPLICATION

(11) **EP 0 535 415 A1**
(43) Date of publication of application: **07.04.1993**
(21) Application number: 92115456.3
(22) Date of filing: 10.09.1992
(51) Int. Cl.: A01N 43/40

(54) **Plant growth regulator compositions**

(30) Priority: 04.10.1991 US 771595; 04.10.1991 US 771599
(71) Applicant: BASF CORPORATION, Parsippany, New Jersey 07054 (US)
(72) Inventor: O'Neal, Thomas Denny, Durham, North Carolina 27705 (US)
(74) Representative: Karau, Wolfgang, Dr.

(57) **Abstract**

The present invention provides plant growth regulator compositions and associated methods which provide increased yield. The composition is an effective amount of a mixture of (A) an N,N-dimethyl-piperidinium salt of the formula: 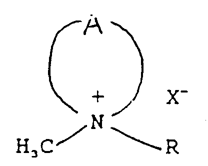
where R is methyl or ethyl; X is the anion of an inorganic or organic, but not phytotoxic acid, preferably bromide or chloride, and A is a chain of 4 or 5 methylene groups, which chain may be substituted by chloro, bromo, methyl, chloromethyl, bromomethyl, hydroxymethyl, and methylene, or which chain containing one or two double bonds, or A is the chain -(CH₂)n-NH-, where n is 3 or 4, and (B) indole acetic acid, indole acetic acid derivatives, naphthalene acetic acid, naphthalene acetic acid derivatives, or mixtures thereof.

## Description

The present invention relates to compositions for regulating plant growth regulators which comprise an effective mixture of (A) N,N-dimethyl piperidinium salts and (B) indole acetic acid, indole acetic acid derivatives, naphthalene acetic acid, naphthalene acetic acid derivatives and mixtures thereof and methods of regulating plant growth with such compositions.

Plant growth regulators affect the physiology of plant growth and influence the natural rhythm of a plant. More specifically, plant growth regulators may, for example, reduce plant height, stimulate seed germination, induce flowering, darken leaf coloring, minimize lodging of cereals, slow grass growth on lawns, reduce boll rot and provide better boll retention in cotton.

The plant growth regulator, known trivially as mepiquat chloride, is generally used to control various aspects of cotton boll growth. See, for example, knafaga, Angew. Botanik 57, 257-265 (1983); Sawan et al., J. Agronomy & Plant Science, 154, 120-128 (1985); U.S. Patents 3,905,798 and 4,447,255.

Auxins, such as indole acetic acid (IAA) and related natural or synthetic analogues, such as naphthalene acetic acid (NAA), have been used as growth regulators, however, they have had mixed results, particularly, when used on cotton. Application of auxins often causes endogenous generation of ethylene which tends to decrease fruit retention and yield.

In spite of these disclosures, there is a need for plant growth regulator compositions which provide increased or more consistent yield enhancement and further enhance early maturity.

The present invention has met the above-described needs by providing compositions and methods which increase yield enhancement and further enhance early maturity, particularly in applications of the plant growth regulator compositions of the present invention on cotton.

The preferred plant growth regulators include a plant growth regulating mixture of (A) N,N-dimethyl piperidinium salts and (B) indole acetic acid ("IAA"), IAA derivatives, naphthalene acetic acid ("NAA") and NAA derivatives, and mixtures thereof.

More preferably, component (A) is the group consisting of 1,1-dimethyl-3,4-dehydropiperidinium bromide, 4-chloro-1,1-dimethyl piperidinium bromide, 1,1-dimethylhexahydropyridazinium bromide, and 1,1-dimethylpiperidinium chloride and component (B) is selected from the group consisting of indole acetic acid, naphthalene acetic acid, indole butyric acid, alpha naphthyl acetic acid, 2-naphthyloxyacetic acid, naphthaleneacetamide and 1-naphthylacetic acid.

It is an object of the present invention to provide an agriculturally acceptable plant growth regulator composition and methods of using such composition which provide increased or more conistent yield enhancement and/or enhanced early maturity.

These and other objects of the present invention will be more fully understood from the following description of the invention.

As used herein, the term "agriculturally acceptable" includes agricultural, industrial and residential use.

As used herein, "plant growth regulator" or "regulation" includes the following plant responses: inhibition of cell elongation, for example reduction in stem height and internodal distance, strengthening of the stem wall, thus increasing the resistance to lodging; compact growth in ornamentals for the economic production of improved quality plants; promotion of better fruiting; increasing the number of ovaries with a view to stepping up yield; promotion of senescence of the formation of tissue enabling fruit to absciss; defoliation of nursery and ornamental bushes and trees for mail-order business in the fall; defoliation of trees to interrupt parasitic chains of infection; hastening of ripening, with a view to programming the harvest by reducing the harvest to one to two pickings and interrupting the food-chain for injurious insects.

As used herein plant growth regulator compositions include both package and tank mix compositions.

The present invention comprises plant growth regulator compositions comprising an agriculturally and plant growth regulating effective amount of a mixture of (A) an N,N-dimethylpiperidinium salt and (B) indole acetic acid, indole acetic acid derivatives, naphthalene acetic acid, naphthalene acetic acid derivatives, or mixtures thereof and methods of using such composition.

The new compositions have improved action, particularly in cotton plants. Specifically, these new compositions show a better yield response.

Preferred component (A) plant growth regulators include salts of the formula: 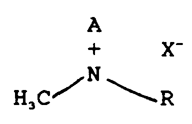
where R is methyl or ethyl; X is the anion of an inorganic or organic, but not phytotoxic acid, preferably bromide or chloride, and A is a chain of 4 or 5 methylene groups, which chain may be substituted by chloro, bromo, methyl, chloromethyl, bromomethyl, hydroxymethyl, and methylene, or which chain containing one or two double bonds, or A is the chain -(CH₂)ₙ-NH-, where n is 3 or 4, disclosed in U.S. Patent 3,905,798 and hereby incorporated by reference.

Preferred examples of component (A) include 1,1-dimethyl-3,4-dehydro-piperidinium bromide, 4-chloro-1,1-dimethyl- piperidinium bromide, 1,1-dimethylhexahydropyridazinium bromide and 1,1-dimethyl-piperidinium chloride. The most preferred plant growth regulator is 1,1-dimethyl-piperidinium chloride, also known as N,N-dimethylpiperidinium chloride or mepiquat chloride. This product is commercially available under the registered trademark Pix® (BASF AG, Germany).

Suitable Component (B) compounds include indole acetic acid (IAA), naphthalene acetic acid (NAA), indole butyric acid (IBA), alpha naphthyl acetic acid (NAO), 2-naphthyloxyacetic acid (NOA), naphthaleneacetamide (NAD) and 1-naphthylacetic acid (NAA). The most preferred component (B) is NAA.

For a given plant growth regulator composition, the skilled artisan will readily arrive at a composition having the optimum ratio of the ingredients by routine experimentation. However, for example, in order to prepare the compositions of the present invention, from about 0.001 to about 0.25 pounds/acre/season of component (A) is thoroughly mixed with about 0.0001 to about 0.25 pounds/acre/season of component (B). More preferably, about 0.001 to about 0.25, and most preferably, about 0.005 to about 0.15 pounds/acre/season of component (A) is mixed with the more preferable range of about 0.0001 to about 0.15 pounds/acre/season of component (B).

The number of applications and concentrations per season may vary from one to as many as needed, however, it is preferred to apply the composition about 2 to about 7 times per season. To obtain the desired concentration of active ingredients, the grower divides the number of applications needed by the total seasonal application rate. An example of application rates can be seen in Table 1. The rate of application is in pounds/acre.

**TABLE 1**

| No. of Appls. | PIX | NAA |
|---|---|---|
| 1 | 0.005 - 0.132 | 0.0001 - 0.10 |
| 2 | 0.0025 - 0.066 | 0.00005 - 0.05 |
| 3 | 0.0017 - 0.044 | 0.000033- 0.033 |
| 4 | 0.00125- 0.033 | 0.000025- 0.025 |

The ratio of the active ingredients in the present invention may vary widely within wide limits, depending upon conditions.

The compositions of this invention may be prepared, for example, by adding, in any order, the various components of the composition of the present invention. For example, one may start with a commercial formulation of mepiquat chloride, which is an aqueous concentrate containing 0.35 pounds per gallon of mepiquat chloride (4.2%) by weight. Thereafter, in any order, one mixes suitable amounts of component (B) and any optional adjuvants or ingredients. Water may be optionally employed in any amount desired.

The above plant growth regulator composition may then be dispersed in water and sprayed onto plants according to the method of the present invention. For example, spray volumes useful in the present invention range from about 0.5 pint/acre to about 100 gallons/acre, and more preferably, from about 0.5 pint/acre to abut 20 gallons/acre.

While the ratios of the concentrations of the various components of the present invention hereinafter suggested, those skilled in the art will recognize that minor variations may be necessary to accommodate particular characteristics of acceptable plant growth regulators which may be employed in this invention. In general, for example, component (A) will contain from about 0.1 to about 98%, and preferably from about 0.5 to about 98% by weight of active ingredient.

The amount of water which is employed to prepare the concentrate or final application concentration, as in a spray, is adjusted as necessary. The concentrate and/or final composition may also be a dry formulation.

In addition to the above-described components, the compositions of the present invention may also include other ingredients or adjuvants commonly employed in the art.

Examples of such ingredients include drift control agents, defoaming agents, preservatives, surfactants, fertilizers, phytotoxicants, herbicides, pesticides, insecticides, fungicides, wetting agents, adherents, nematocides, bactericides, trace elements, synergists, antidotes, mixtures thereof and other such adjuvants well known in the plant growth regulator art.

However, it is preferred to employ the compositions of the present invention along with sequential treatments with these other components for optimal effect.

The compositions of the present invention may be applied to above ground portions of plants. The application of liquid and particulate solid plant growth regulator compositions to above ground portions of plants may be carried out by conventional methods, for example, boom and hand application, including sprayers or dusters. The composition may be applied aerially as a spray, if desired. The mixtures of the present invention are preferably used in the form of aqueous solutions. The mixtures are applied in a conventional manner, for example, by spraying, atomizing, watering or disinfecting seed.

The compositions of the present invention may be applied for instance, in the form of directly sprayable solutions, powders, suspensions (including high-percentage aqueous, oily or other suspensions), dispersions, emulsions,oil dispersions, pastes, dusts, broadcasting agents, or granules by spraying, atomizing, dusting broadcasting or watering. The forms of application depend entirely on the purpose for which the compositions are being used. In any event, they should ensure a uniform distribution of the active ingredients in the composition.

For the preparation of solutions, emulsions pastes and oil dispersions to be sprayed direct, mineral oil fractions of medium to high boiling point, such as kerosene or diesel oil, further coal-tar oils, and the like, and oils of vegetable or animal origin, aliphatic, cyclic and aromatic hydrocarbons such as benzene, toluene, xylene, paraffin, tetrahydronaphthalene, alkylated naphthalenes and their derivatives such as lower (1-4 carbons) alcohols, chloroform, carbon tetrachloride cyclohexanol, cyclohexanone, chlorobenzene, isophorone, and the like, and strongly polar solvents such as dimethylformamide, dimethyl sulfoxide, N-methylpyrrolidone, water and the like are suitable.

Aqueous formulations may be prepared from emulsion concentrates, pastes, oil dispersions or wettable powders by adding water. To prepare emulsions, pastes and oil dispersions the ingredients as such or dissolved in an oil or solvent may be homogenized in water by means for wetting or dispersing agents, adherents or emulsifiers. Concentrates which are suitable for dilation with water may be prepared from active ingredients, wetting agents, adherents, emulsifying or dispersing agents and possibly solvent or oil.

Examples of surfactants include alkali metal, alkaline earth metal and ammonium salts of ligninsulfonic acid, napthalenesulfonic acids, phenosulfonic acids, alkylaryl sulfonates, alkyl sulfates, and alkyl sulfonates, alkali metal and alkaline earth metal salts of dibutylnaphthalenesulfonic acid, lauryl ether sulfate, fatty alcohol sulfates, alkali metal and alkaline earth metal salts of fatty acids, salts of sulfated hexadecanols, heptadecanols, and octadecanols, salts of sulfated fatty alcohol glycol ether, condensation products of sulfonated naphthalene and naphthalene or napthalenesulfonic acids with phenol and formaldehyde, polyoxyethylene octylphenol ethers, ethoxylated isooctylphenol, ethoxylated octylphenol and ethoxylated nonylphenol, alkylphenol polyglycol ethers, tributylphenol polyglycol ethers, alkylaryl polyester alcohols,isotridecyl alcohols, fatty alcohol ethylene oxide condensates, ethoxylated castor oil, polyoxyethylene alkyl ethers, ethoxylated polyoxypropylene, lauryl alcohol polyglycol ether acetal, sorbitol esters, lignin, sulfite waste liquors, silicone based surfactants and methyl cellulose.

Powders, dusts and broadcasting agents may be prepared by mixing or grinding the active ingredients with a solid carrier.

Granules, for example, coated, impregnated or homogeneous granules, may be prepared by bonding the active ingredients to solid carriers. Examples of solid carriers are mineral earths such as silicic acid, silica gels, silicates, talc, kaolin, Attaclay, limestone, lime, chalk, bole, loess, clay, dolomite, diatomaceous earth, calcium sulfate, magnesium sulfate, magnesium oxide, ground plastics, fertilizers such as ammonium sulfate, ammonium phosphate, ammonium nitrate, and ureas, and vegetable products such as grain flours, bark meal, wood meal, and nutshell meal, cellulosic powders, and the like.

The action of the compositions of the present invention are optimal even at low application rates. It is preferred that the compositions of the present invention be applied by means of a Low Rate Multiple (LRM) application. As used herein, "LRM application" means periodic applications at lower doses of the composition. This method of application is most preferred since under some conditions a single does at a higher rate may "shock" the plant. This method allows the grower to fine tune the growth of the crop by controlling the dose of the composition to suit particular environmental or varietal conditions. The compositions may be reapplied if needed depending upon the metabolism of the composition by a particular crop or if biodilution of the composition has occurred.

The following examples serve to illustrate the invention and should in no way be construed as limiting the scope thereof.

### EXAMPLE

The compositions of the present invention were tested on cotton plants in various locations (A-D) to determine relative seed cotton yield. Location C was conducted in drought conditions. The check/control was 100. Some of the compounds or compositions were applied four times beginning at match head square and every 7 to 14 days thereafter. The results of this test are shown in Table 2. Table 2 shows the yield of cotton treated with naphthalene acetic acid (NAA) alone and in combination with mepiquat chloride (PIX®).

**TABLE 2**

| | NAA 0.0004X4 | NAA O.0013X4 | NAA 0.0004X4 + PIX | NAA 0.0013X4 + PIX | PIX 0.0055X4 |
|---|---|---|---|---|---|
| A | 103.9 | 106.3 | 107.9 | 109.4 | 103.9 |
| B | 105.1 | 106.1 | 109.1 | 98.0 | 104.0 |
| C | 125.6 | 95.9 | 104.7 | 112.2 | 117.5 |
| D | 103.7 | | 114.8 | | 111.6 |

As can be seen from the above results, the mixture of mepiquat chloride and NAA showed increased seed cotton yield.

Whereas particular embodiments of the invention have been described above for purposes of illustration, it will be appreciated by those skilled in the art that numerous variations of the details may be made without departing from the invention as described in the appended claims.

## Claims

1. A plant growth regulator composition comprising an effective amount of a mixture of:
(A) an N,N-dimethyl-piperidinium salt; and
(B) indole acetic acid, indole acetic acid derivatives, naphthalene acetic acid, naphthalene acetic acid derivatives, or mixtures thereof.

2. The composition of claim 1 wherein component (A) is selected from the group consisting of 1,1-dimethyl-3,4-dehydropiperidinium bromide, 4-chloro-1,1-dimethylpiperidinium bromide, 1,1-dimethylhexahydropyridazinium bromide, and 1,1-dimethylpiperidinium chloride.

3. The composition of claim 2 wherein component (A) is 1,1-dimethylpiperidinium chloride.

4. The composition of claim 1 wherein component (B) is selected from the group consisting of indole acetic acid, naphthalene acetic acid, indole butyric acid, alpha naphthyl acetic acid, 2-naphthyloxyacetic acid, naphthaleneacetamide and 1-naphthylacetic acid.

5. The composition of claim 4 wherein component (B) is naphthalene acetic acid.

6. The composition of claim 1 wherein about 0.001 to about 0.25 pounds/acre/season of component (A): and about 0.0001 to about 0.25 pounds/acre/season of (B) is applied.

7. The composition of claim 1 wherein said composition includes drift control agents, defoaming agents, preservatives, fertilizers, phytotoxicants, herbicides, pesticides, insecticides, fungicides, and mixtures thereof.

8. A method of regulating plant growth which comprises treating the plant, its seed and/or its enviroment with an effective amount of a composition as set forth in claim 1.

9. A method of regulating plant growth which comprises treating the plant, its seed and/or its enviroment with an effective amount of a composition as set forth in claim 2.

10. A method of regulating plant growth which comprises treating the plant, its seed and/or its enviroment with an effective amount of a composition as set forth in claim 3.

11. A method of regulating plant growth which comprises treating the plant, its seed and/or its enviroment with an effective amount of a composition as set forth in claim 4.

12. A method of regulating plant growth which comprises treating the plant, its seed and/or its enviroment with an effective amount of a composition as set forth in claim 5.

13. A method of regulating plant growth which comprises treating the plant, its seed and/or its enviroment with an effective amount of a composition as set forth in claim 6.

14. A method of regulating plant growth which comprises treating the plant, its seed and/or its enviroment with an effective amount of a composition as set forth in claim 7.

15. A method as claimed in claim 8 wherein the plant is a cotton plant.

16. A method as claimed in claim 8 wherein the plant growth regulating composition is applied in low rate multiples.

17. A method as claimed in claim 16 wherein an effective amount of the plant growth regulating composition is applied about 2 to 7 times per season.
